# EUROPÄISCHE PATENTSCHRIFT

(11) **EP 1 432 751 B1**
(45) Veröffentlichungstag und Bekanntmachung des Hinweises auf die Patenterteilung: **11.07.2007**
(21) Anmeldenummer: 02794510.4
(22) Anmeldetag: 22.07.2002
(51) Int. Cl.: C08G 64/18, C08G 64/30

(54) **VERFAHREN ZUR HERSTELLUNG VON POLYCARBONATHOMO- UND COPOLYMEREN MITTELS DOPPEL METALLCYANID-KATALYSE**
PROCESS FOR PREPARING POLYCARBONATE HOMOPOLYMERS AND COPOLYMERS BY MEANS OF DOUBLE METAL CYANIDE CATALYSIS
PROCEDE POUR PREPARER HOMOPOLYMERES ET COPOLYMERES DE POLYCARBONATE PAR CATALYSE AU CYANURE BIMETALLIQUE

(30) Priorität: 03.08.2001 DE 10138216
(43) Veröffentlichungstag der Anmeldung: 30.06.2004
(73) Patentinhaber: Bayer MaterialScience AG, 51368 Leverkusen (DE)
(72) Erfinder: HOFMANN, Jörg, 47829 Krefeld (DE); SCHÄFER, Walter, 42799 Leichlingen (DE); STEINLEIN, Christian, 40882 Ratingen (DE)
(86) Internationale Anmeldenummer: PCT/EP2002/008131
(87) Internationale Veröffentlichungsnummer: WO 2003/014186

(56) Entgegenhaltungen:
- US-A- 4 826 887
- US-A- 5 115 045

## Beschreibung

Die Erfindung betrifft Verfahren zur Herstellung aliphatischer Polycarbonathomo- und -copolymere durch ringöffnende Homo- oder Copolymerisation von cyclischen Carbonaten mittels DMC-Katalyse.

Doppelmetallcyanid(DMC)-Katalysatoren für die ringöffnende Polymerisation von sauerstoffhaltigen, cyclischen Monomeren sind seit langem bekannt. Kommerzielles Interesse haben DMC-Katalysatoren vor allem für die Herstellung von Polyetherpolyolen durch Polyaddition von Epoxiden an aktive Wasserstoffatome aufweisende Starterverbindungen gefunden (siehe z.B. US-A 3 404 109, US-A 3 829 505, US-A 3 941 849 und US-A 5 158 922), da der Einsatz der DMC-Katalysatoren eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren bewirkt. Verbesserte, hochaktive DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen zudem eine außerordentlich hohe Aktivität und ermöglichen die Polyetherpolyolherstellung bei sehr geringen Katalysatorkonzentrationen (25 ppm oder weniger), so dass eine Abtrennung des Katalysators aus dem fertigen Produkt nicht mehr erforderlich ist. DMC-Katalysatoren ermöglichen daneben auch die Homo- und Copolymerisation anderer sauerstoffhaltiger, cyclischer Monomere, wie z.B. von Oxetanen (US-A 3 278 457, US-A 3 404 109), cyclischen Anhydriden (US-A 5 145 883, US-A 3 538 043) oder Lactonen (US-A 5 032 671).

Aliphatische Polycarbonathomo- und -copolymere eignen sich als Additive für Thermoplastsysteme. Breite Anwendung finden aliphatische OH-funktionelle Polycarbonate zudem als Hydroxylkomponente zum Aufbau von Polyurethanen und Polyurethan-Harnstoff-Elastomeren. Gängige Methoden zum Herstellen aliphatischer Polycarbonate sind Umesterungen von Diolen mit Dialkylcarbonaten aus kurzkettigen Alkoholen, mit Dioxolanonen oder mit Diphenylcarbonat. Diese Reaktionen werden durch Katalysatoren, besonders Alkali-, Zinn- und Titanverbindungen, beschleunigt (siehe z.B. Kunststoffhandbuch, Bd. 3/1 Polycarbonate, Hanser Verlag, München, 1992, S. 118 f.).

Es wurde nun gefunden, dass aliphatische Polycarbonathomo- und -copolymere durch ringöffnende Homo- oder Copolymerisation von cyclischen Carbonaten mittels DMC-Katalyse erhalten werden können.

Die Erfindung betrifft somit Verfahren zur Herstellung aliphatischer Polycarbonathomo- und -copolymere durch ringöffnende Homo- oder Copolymerisation von cyclischen Carbonaten mittels DMC-Katalyse.

Geeignete cyclische Carbonate besitzen die allgemeinen Formeln (I.) oder (II.) 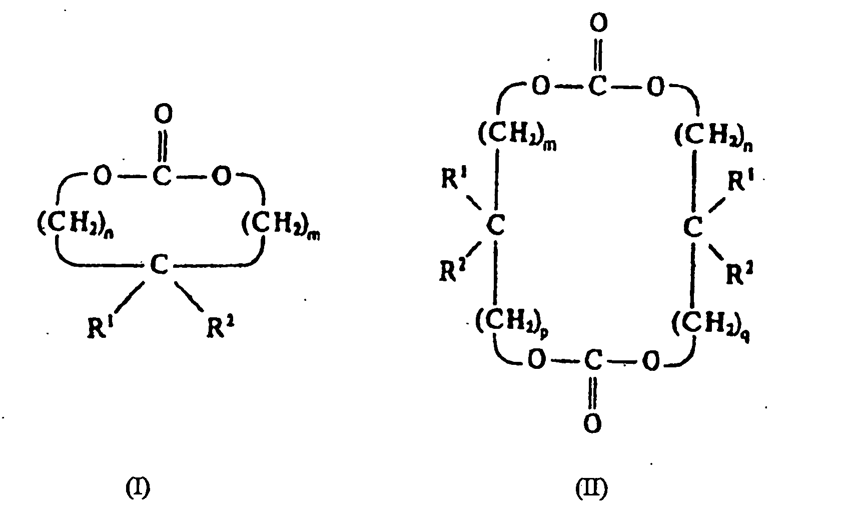 wobei m, n, p und q unabhängig voneinander 0, 1, 2, 3, 4, 5 oder 6 sind und R¹ und R² H, C₁₋₆-Alkyl, C₃₋₆-Alkenyl, C₁₋₆-Alk(en)yloxy-C₁₋₆-alkyl, insbesondere H, CH₃ und C₂H₅ bedeuten.

Bevorzugt eingesetzte cyclische Carbonate (I) oder (II) sind Trimethylenglycolcarbonat, Neopentylglykolcarbonat, 1,4-Butandiolcarbonat und dimere Carbonate des Pentandiols oder des Hexandiols. Besonders bevorzugt sind 6-Ringcarbonate, insbesondere Neopentylglycolcarbonat.

Geeignete DMC-Katalysatoren sind im Prinzip bekannt und ausführlich beschrieben im oben angeführten Stand der Technik. Bevorzugt eingesetzt werden verbesserte, hochaktive DMC-Katalysatoren, die z.B. beschrieben sind in US-A 5 470 813, EP-A 700 949, EP-A 743 093, EP-A 761 708, WO 97/40086, WO 98/16310 und WO 00/47649. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die DMC-katalysierte ringöffnende Homo- oder Copolymerisation der cyclischen Carbonate erfolgt im allgemeinen bei Temperaturen von 20 bis 200°C, bevorzugt im Bereich von 40 bis 180°C, besonders bevorzugt bei Temperaturen von 80 bis 160°C. Die Reaktion kann bei Gesamtdrücken von 0,001 bis 20 bar durchgeführt werden. Die Polymerisation kann in Substanz oder einem inerten, organischen Lösungsmittel, wie z.B. Toluol oder THF, durchgeführt werden. Die Menge an Lösungsmittel beträgt üblicherweise 10 bis 30 Gew.-%, bezogen auf die Menge des herzustellenden Polymerisats.

Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,05 Gew.-%, bezogen auf die Menge des herzustellenden Polymerisats.

Die Polymerisation kann kontinuierlich oder diskontinuierlich, z.B. in einem Batch-oder im Semibatchverfahren durchgeführt werden.

Optional wird die DMC-katalysierte ringöffnende Homo- oder Copolymerisation der cyclischen Carbonate in Gegenwart einer oder mehrerer aktive Wasserstoffatome aufweisenden Starterverbindung(en) durchgeführt. Auf diese Weise lassen sich OH-funktionalisierte aliphatische Polycarbonathomo- und -copolymere herstellen, die als Polyolkomponenten zum Aufbau vom Polyurethansystemen geeignet sind.

Als aktive Wasserstoffatome aufweisende Starterverbindungen werden vorzugsweise Verbindungen mit Molekulargewichten von 18 bis 10.000 g/mol und 1 bis 8 Hydroxylgruppen eingesetzt. Beispiele sind Wasser, Ethanol, Butanol, Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Polyetherpolyole und Polyesterpolyole.

Die DMC-katalysierte ringöffnende Polymerisation der cyclischen Carbonate kann als Homopolymerisation durchgeführt werden, optional in Gegenwart einer oder mehrerer aktive Wasserstoffatome aufweisenden Starterverbindung(en).

Die DMC-katalysierte ringöffnende Polymerisation der cyclischen Carbonate kann auch als Copolymerisation durchgeführt werden, wiederum optional in Gegenwart einer oder mehrerer aktive Wasserstoffatome aufweisenden Starterverbindung(en). Dabei ist sowohl eine statistische Copolymerisation als auch eine Blockcopolymerisation möglich.

Bei der statistischen Copolymerisation wird die DMC-katalysierte ringöffnende Polymerisation der cyclischen Carbonate in Gegenwart von einem oder mehreren beliebigen weiteren für die Polymerisation mit DMC-Katalysatoren geeigneten Monomeren durchgeführt. Besonders geeignet für die statistische Copolymerisation mit cyclischen Carbonaten sind Epoxide, insbesondere Ethylenoxid, Propylenoxid und Butylenoxid sowie deren Mischungen, Oxetane, cyclische Anhydride, wie z.B. Phthalsäureanhydrid, cyclische Ester, wie z.B. Caprolacton, und Lactide.

Bei der Herstellung von Polycarbonat-Blockcopolymerisaten wird erfindungsgemäß der aliphatische Polycarbonatblock mittels DMC-katalysierter ringöffnender Polymerisation von cyclischen Carbonaten erhalten. Bevorzugte Blockcopolymere sind Poly(ester-block-carbonat)copolymere und Poly(ether-block-carbonat)copolymere, wobei der Ester- bzw. Etherblock durch beliebige Verfahren oder Katalysatoren erhalten werden kann.

In einer bevorzugten Ausführungsform des Verfahrens wird zunächst in bekannter Weise durch DMC-katalysierte Polyaddition von Epoxiden, insbesondere von Propylenoxid und/oder Propylenoxid/Ethylenoxid-Mischungen, an die oben aufgeführten, aktive Wasserstoffatome aufweisenden Starterverbindungen ein Polyetherpolyol hergestellt, und das den aktiven DMC-Katalysator enthaltende Polyetherpolyol anschließend in erfindungsgemäßer Weise mit den cyclischen Carbonaten unter Ringöffnung umgesetzt. Hierbei können sekundäre Hydroxylgruppen des Polyetherpolyols ganz oder teilweise in für die Umsetzung mit Isocyanatgruppen reaktivere primäre Hydroxylgruppen umgewandelt werden. Solche Poly(ether-carbonat)polyole sind daher für den Einsatz in Polyurethanen von großem Interesse.

### Beispiele

### Beispiel 1

In einem beheizbaren Planschlifftopf mit Rührer und Rückflusskühler wurden 20 g einer Polypropylenglykol-Starterverbindung (zahlenmittleres Molekulargewicht =1.000 g/mol) und 4 mg DMC-Katalysator (enthaltend Zinkhexacyanocobaltat, tert.-Butanol und Polypropylenglykol mit einem zahlenmittleren Molekulargewicht von 1000 g/mol; beschrieben in EP-A 700 949) unter Argon vorgelegt und auf 105°C aufgeheizt. Anschließend wurden bei 105°C innerhalb von 3 Stunden 20 g Propylenoxid kontinuierlich unter Normaldruck zudosiert. Nach erfolgter Propylenoxid-Dosierung wurden 5,2 g Neopentylglykolcarbonat zugegeben und es wurde dann bei 150°C 1 Stunde lang unter Normaldruck gerührt. Dann wurden 1 h lang flüchtige Anteile bei 150°C / 1 mbar abdestilliert; anschließend wurde auf Raumtemperatur abgekühlt.

Es wurde ein leicht gelbliches, klares Produkt erhalten. ¹H- und ¹³C-NMR-Analyse ergaben, dass 28% der sekundären Hydroxylgruppen des Polypropylenglykols mit Neopentylglykolcarbonat unter Ringöffnung und Bildung einer primären Hydroxylgruppe reagiert hatten.

### Beispiel 2

In einem beheizbaren Planschlifftopf mit Rührer und Rückflusskühler wurden 20 g einer Polypropylenglykol-Starterverbindung (zahlenmittleres Molekulargewicht = 1.000 g/mol) und 2 mg des in Bsp. 1 verwendeten DMC-Katalysators unter Argon vorgelegt und auf 105°C aufgeheizt. Anschließend wurden bei 105°C innerhalb von 3 Stunden 20 g Propylenoxid kontinuierlich unter Normaldruck zudosiert. Nach erfolgter Propylenoxid-Dosierung werden 5,2 g Neopentylglykolcarbonat zugegeben und dann wurde bei 150°C 5 Stunden lang unter Normaldruck gerührt. Dann wurden 1 h lang flüchtige Anteile bei 150°C / 1 mbar abdestilliert und die Reaktionsmischung anschließend auf Raumtemperatur abgekühlt.

Es wurde ein gelbliches, klares Produkt erhalten. ¹H- und ¹³C-NMR-Analyse ergaben, dass 47% der sekundären Hydroxylgruppen des Polypropylenglykols mit Neopentylglykolcarbonat unter Ringöffnung und Bildung einer primären Hydroxylgruppe reagiert hatten.

### Beispiel 3

In einem beheizbaren Planschlifftopf mit Rührer und Rückflusskühler wurden 20 g einer Polypropylenglykol-Starterverbindung (zahlenmittleres Molekulargewicht = 1.000 g/mol) und 2 mg des in Bsp. 1 verwendeten DMC-Katalysators unter Argon vorgelegt und auf 105°C aufgeheizt. Anschließend wurden bei 105°C innerhalb von 3 Stunden 20 g Propylenoxid kontinuierlich unter Normaldruck zudosiert. Nach erfolgter Propylenoxid-Dosierung wurden 15,6 g Neopentylglykolcarbonat zugegeben und es wurde dann bei 150°C 1 Stunde lang unter Normaldruck gerührt. Dann wurden 1 h lang flüchtige Anteile bei 150°C / 1 mbar abdestilliert und die Reaktionsmischung dann auf Raumtemperatur abgekühlt.

Es wurde ein gelbliches und (aufgrund von nicht umgesetztem Neopentylglykolcarbonat) trübes Produkt erhalten. ¹H- und ¹³C-NMR-Analyse ergaben, dass 70% der sekundären Hydroxylgruppen des Polypropylenglykols mit Neopentylglykolcarbonat unter Ringöffnung und Bildung einer primären Hydroxylgruppe reagiert hatten.

## Patentansprüche

1. Verfahren zur Herstellung aliphatischer Polycarbonathomo- und -copolymere durch ringöffnende Homo- oder Copolymerisation von cyclischen Carbonaten mittels DMC-Katalyse.

2. Verfahren gemäß Anspruch 1, wobei die cyclischen Carbonate die allgemeinen Formeln (I) oder (II) besitzen 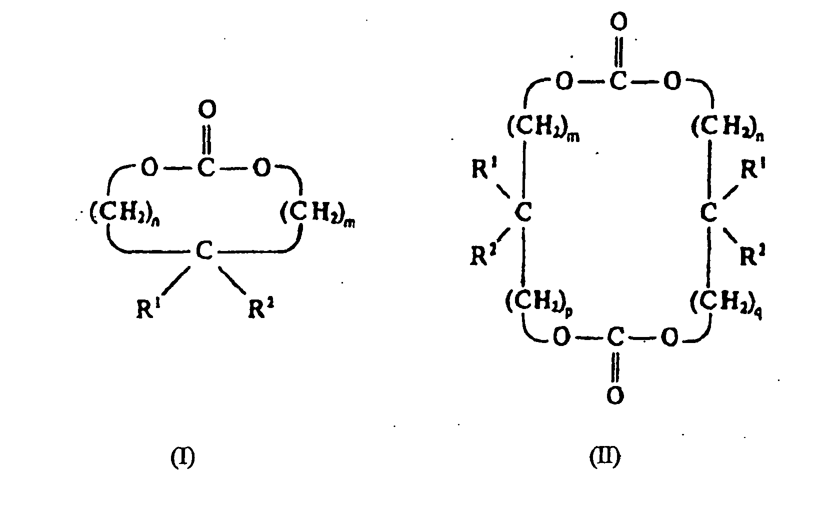 wobei m, n, p und q unabhängig voneinander 0, 1, 2, 3, 4, 5 oder 6 sind und R¹ und R² H, C₁₋₆-Alkyl, C₃₋₆-Alkenyl, C₁₋₆-Alk(en)yloxy-C₁₋₆-alkyl bedeuten.

3. Verfahren gemäß Anspruch 1, wobei das cyclische Carbonat Neopentylglykolcarbonat ist.

4. Verfahren gemäß einem der Ansprüche 1 bis 3, wobei der eingesetzte DMC-Katalysator Zinkhexacyanocobaltat(III) enthält.

5. Verfahren gemäß einem der Ansprüche 1 bis 4, wobei der eingesetzte DMC-Katalysator tert.-Butanol enthält.

6. Verfahren gemäß einem der Ansprüche 1 bis 5, wobei die DMC-katalysierte ringöffnende Homo- oder Copolymerisation der cyclischen Carbonate in Gegenwart einer oder mehrerer aktive Wasserstoffatome aufweisenden Starterverbindung(en) durchgeführt wird.

7. Verfahren zur Herstellung von Poly(ether-carbonat)polyolen, bei dem zunächst durch DMC-katalysierte Polyaddition von Epoxiden an aktive Wasserstoffatome aufweisende Starterverbindungen ein Polyetherpolyol hergestellt, und das den aktiven DMC-Katalysator enthaltende Polyetherpolyol anschließend mit cyclischen Carbonaten unter Ringöffnung umgesetzt wird.

## Claims

1. Process for the production of aliphatic polycarbonate homo- and copolymers by ring-opening homo- or copolymerisation of cyclic carbonates by means of DMC catalysis.

2. Process for the production of aliphatic polycarbonate homo- and copolymers according to claim 1, wherein the cyclic carbonates possess the general formulae (I) or (II) 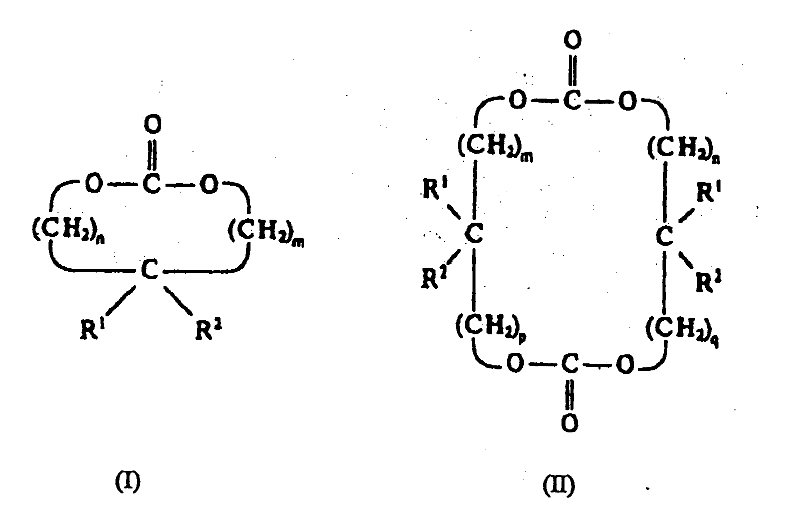 wherein m, n, p and q, independently of one another, signify 0, 1, 2, 3, 4, 5 or 6 and R¹ and R² signify H, C₁₋₆ alkyl, C₃₋₆ alkenyl, C₁₋₆ alk (en) yloxy-C₁₋₆ alkyl.

3. Process for the production of aliphatic polycarbonate homo- and copolymers according to claim 1, wherein the cyclic carbonate is neopentyl glycol carbonate.

4. Process for the production of aliphatic polycarbonate homo- and copolymers according to one of claims 1 to 3, wherein the DMC catalyst used contains zinc hexacyanocobaltate(III).

5. Process for the production of aliphatic polycarbonate homo- and copolymers according to one of claims 1 to 4, wherein the DMC catalyst used contains tert.-butanol.

6. Process for the production of aliphatic polycarbonate homo- and copolymers according to one of claims 1 to 5, wherein the DMC-catalysed ring-opening homo- or copolymerisation of the cyclic carbonates is performed in the presence of one or more starter compounds exhibiting active hydrogen atoms.

7. Process for the production of poly(ether-carbonate) polyols, in which a polyether polyol is first produced by DMC-catalysed polyaddition of epoxides to starter compounds exhibiting active hydrogen atoms, and the polyether polyol containing the active DMC catalyst is then reacted with cyclic carbonates, with ring-opening.

## Revendications

1. Procédé pour la préparation d'homo- et de copolymères de polycarbonates aliphatiques par homo- ou copolymérisation avec ouverture de cycle de carbonates cycliques au moyen d'une catalyse DMC.

2. Procédé selon la revendication 1, dans lequel les carbonates cycliques présentent les formules (I) ou (II) générales 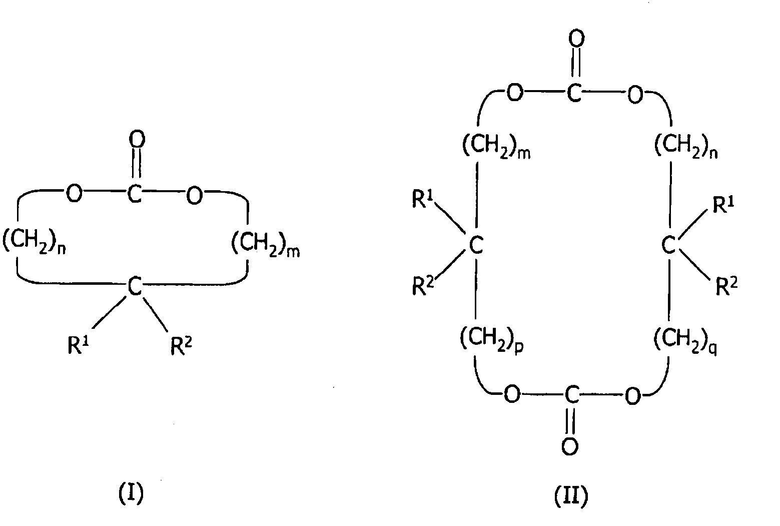 dans lesquelles m, n, p et q sont indépendamment les uns des autres égaux à 0, 1, 2, 3, 4, 5 ou 6 et R¹ et R² représentent H, un groupe alkyle en C₁-C₆, alcényle en C₃-C₆, (alc(én)yloxy en C₁-C₆)-(alkyle en C₁-C₆).

3. Procédé selon la revendication 1, dans lequel le carbonate cyclique est le carbonate de néopentylglycol.

4. Procédé selon l'une quelconque des revendications 1 à 3, dans lequel le catalyseur DMC utilisé contient de l'hexacyanocobaltate (III) de zinc.

5. Procédé selon l'une quelconque des revendications 1 à 4, dans lequel le catalyseur DMC utilisé contient du tert.-butanol.

6. Procédé selon l'une quelconque des revendications 1 à 5, dans lequel l'homo- ou la copolymérisation avec ouverture de cycle DMC-catalysée des carbonates cycliques est réalisée en présence d'un ou plusieurs composé(s) de départ présentant des atomes d'hydrogène actifs.

7. Procédé pour la préparation de poly(éther-carbonate)polyols, dans lequel on prépare dans un premier temps par une polyaddition DMC-catalysée d'époxydes sur des composés de départ présentant des atomes d'hydrogène actifs un polyétherpolyol et on fait ensuite réagir le polyétherpolyol contenant du catalyseur DMC actif avec des carbonates cycliques avec ouverture de cycle.
